# EUROPÄISCHE PATENTSCHRIFT

(11) **EP 3 215 763 B1**
(45) Veröffentlichungstag und Bekanntmachung des Hinweises auf die Patenterteilung: **09.05.2018**
(21) Anmeldenummer: 15790528.2
(22) Anmeldetag: 03.11.2015
(51) Int. Cl.: F16H 61/12, F16H 57/04, F16H 61/00

(54) **VERFAHREN ZUM BETREIBEN EINER FLUIDFÜHRENDEN EINRICHTUNG SOWIE ENTSPRECHENDE FLUIDFÜHRENDE EINRICHTUNG**
METHOD FOR OPERATING A FLUID-GUIDING DEVICE, AND CORRESPONDING FLUID-GUIDING DEVICE
PROCÉDÉ POUR FAIRE FONCTIONNER UN DISPOSITIF DE GUIDAGE DE FLUIDE ET DISPOSITIF DE GUIDAGE DE FLUIDE CORRESPONDANT

(30) Priorität: 06.11.2014 DE 102014016421
(43) Veröffentlichungstag der Anmeldung: 13.09.2017
(73) Patentinhaber: Audi AG, 85045 Ingolstadt (DE)
(72) Erfinder: AMMLER, Stefan, 86673 Bergheim (DE)
(74) Vertreter: Lehle, Josef
(86) Internationale Anmeldenummer: PCT/EP2015/075605
(87) Internationale Veröffentlichungsnummer: WO 2016/071342

(56) Entgegenhaltungen:
- WO-A1-2006/136320
- US-A1- 2013 121 849

## Beschreibung

Die Erfindung betrifft ein Verfahren zum Betreiben einer fluidführenden Einrichtung, die eine elektrisch betriebene Fluidpumpe aufweist, die Fluid aus einem Fluidsumpf der fluidführenden Einrichtung fördert und wenigstens einem Fluidverbraucher zuführt. Die Erfindung betrifft weiterhin eine fluidführende Einrichtung (siehe beispielsweise US 2013/121849 A). Die fluidführende Einrichtung ist beispielsweise eine Getriebeeinrichtung eines Kraftfahrzeugs und somit insbesondere einem Antrieb des Kraftfahrzeugs zugeordnet. Selbstverständlich kann die fluidführende Einrichtung jedoch auch in einem anderen Kontext eingesetzt werden. Die als Getriebeeinrichtung ausgestaltete fluidführende Einrichtung dient dem Herstellen einer Wirkverbindung zwischen einer Antriebseinrichtung des Kraftfahrzeugs und wenigstens einer angetriebenen Achse beziehungsweise Rädern des Kraftfahrzeugs.

Die Getriebeeinrichtung ist vorzugsweise dazu vorgesehen, eine aus mehreren unterschiedlichen Übersetzungen ausgewählte Übersetzung einzustellen, sodass die Wirkverbindung zwischen der Antriebseinrichtung und der wenigstens einen Achse mit dieser Übersetzung vorliegt. Die Antriebseinrichtung weist wenigstens ein Antriebsaggregat, vorzugsweise eine Brennkraftmaschine, auf. Selbstverständlich kann die Antriebseinrichtung auch über mehrere Antriebsaggregate verfügen, wobei ein erstes der Antriebsaggregate beispielsweise in Form der Brennkraftmaschine und ein zweites der Antriebsaggregate als elektrische Maschine beziehungsweise Elektromotor vorliegt.

Die Getriebeeinrichtung weist mehrere Fahrgänge auf, wobei jedem Fahrgang eine der Übersetzungen zugeordnet ist. Beispielsweise liegen mehrere der Fahrgänge als Vorwärtsgänge und wenigstens einer der Fahrgänge als Rückwärtsgang vor. Die Getriebeeinrichtung kann sowohl als manuelles Schaltgetriebe als auch als Automatikgetriebe ausgestaltet sein. In letzterem Fall kann sie in Form eines Wandlerautomatikgetriebes, eines stufenlosen Getriebes, als halbautomatisches Getriebe oder als automatisiertes Schaltgetriebe vorliegen. Die Getriebeeinrichtung kann besonders bevorzugt als Doppelkupplungsgetriebe ausgestaltet sein.

Die fluidführende Einrichtung verfügt über die Fluidpumpe, insbesondere Kühlmittelpumpe oder Schmiermittelpumpe, welche elektrisch angetrieben beziehungsweise antreibbar ist. Der Fluidpumpe ist insoweit vorzugsweise ein Elektromotor zugeordnet, welcher ihrem Antrieb dient. Die Fluidpumpe ist dazu vorgesehen, Fluid, insbesondere Kühlmittel oder Schmiermittel, aus dem Fluidsumpf der fluidführenden Einrichtung, insbesondere aus dem Kühlmittelsumpf oder Schmiermittelsumpf der Getriebeeinrichtung, zu fördern und nachfolgend dem wenigstens einen Fluidverbraucher beziehungsweise Kühlmittelverbraucher oder Schmiermittelverbraucher zuzuführen.

Der Fluidsumpf ist vorzugsweise an einem geodätisch tiefsten Punkt der fluidführenden Einrichtung angeordnet, sodass in der fluidführenden Einrichtung beziehungsweise der Getriebeeinrichtung vorliegendes Fluid aufgrund von Schwerkrafteinfluss in Richtung des Fluidsumpfs gedrängt wird. Der Fluidverbraucher liegt beispielsweise als Fluidauslass beziehungsweise Kühlmittelauslass oder Schmiermittelauslass vor, durch welchen das Fluid ausgebracht werden kann. Der Fluidauslass kann beispielsweise als Düse ausgestaltet sein. Besonders bevorzugt ist der Fluidauslass derart ausgerichtet, dass wenigstens eine Kupplung der fluidführenden Einrichtung und/oder ein Radsatz der fluidführenden Einrichtung mit dem ausgebrachten Fluid beaufschlagt, insbesondere unmittelbar beaufschlagt, ist.

Es ist nun Aufgabe der Erfindung, ein Verfahren zum Betreiben einer fluidführende Einrichtung vorzuschlagen, welche gegenüber dem Stand der Technik Vorteile aufweist, insbesondere Beschädigungen der fluidführenden Einrichtung aufgrund von fehlendem Fluid verhindert.

Dies wird erfindungsgemäß mit einem Verfahren mit den Merkmalen des Anspruchs 1 erreicht. Dabei ist vorgesehen, dass ein Fluidvolumen in dem Fluidsumpf sowie anhand der Drehzahl der Fluidpumpe eine modellierte Stromstärke des von der Fluidpumpe aufgenommenen elektrischen Stroms ermittelt werden und aus der modellierten Stromstärke ein Vergleichswert bestimmt wird, wobei auf eine Fluidunterversorgung der fluidführenden Einrichtung geschlossen wird, wenn das Fluidvolumen größer als ein Schwellenwert und eine gemessene Stromstärke des von der Fluidpumpe aufgenommenen elektrischen Stroms kleiner als der Vergleichswert ist. Bei dem Ermitteln der modellierten Stromstärke kann neben der Drehzahl der Fluidpumpe auch eine Temperatur, insbesondere eine Fluidtemperatur des Fluids, berücksichtigt werden.

Es werden insoweit zunächst das Fluidvolumen und die modellierte Stromstärke ermittelt. Das Fluidvolumen entspricht dem Volumen beziehungsweise der Menge des in dem Fluidsumpf vorliegenden Fluids. Das Fluidvolumen wird modelliert, also mithilfe eines Modells ermittelt. Die modellierte Stromstärke wird anhand der Drehzahl der Fluidpumpe bestimmt. Das bedeutet, dass ein Modell vorliegt, das als Eingangsgröße zumindest die Drehzahl der Fluidpumpe aufweist und als Ausgangsgröße die modellierte Stromstärke ausgibt. Die modellierte Stromstärke entspricht der vermuteten Stromstärke des elektrischen Stroms, der von der Fluidpumpe bei der momentan vorliegenden Drehzahl aufgenommen wird.

Aus der modellierten Stromstärke wird nachfolgend der Vergleichswert bestimmt. Beispielsweise entspricht der Vergleichswert der modellierten Stromstärke. Alternativ kann jedoch auch eine mathematische Beziehung, ein Kennfeld und/oder eine Tabelle herangezogen werden, um aus der modellierten Stromstärke den Vergleichswert zu ermitteln. Weiterhin wir die momentan vorliegende Stromstärke des von der Fluidpumpe aufgenommenen elektrischen Stroms gemessen. Zu diesem Zweck sind geeignete Mittel vorgesehen.

Anschließend wird zum einen das Fluidvolumen mit dem Schwellenwert und zum anderen die gemessene Stromstärke mit dem Vergleichswert verglichen. Dabei wird darauf geprüft, ob das Fluidvolumen größer ist als der Schwellenwert. Weiterhin wird geprüft, ob die gemessene Stromstärke von dem Vergleichswert abweicht, insbesondere kleiner ist als dieser. Sind beide Bedingungen erfüllt, so wird auf die Fluidunterversorgung der fluidführenden Einrichtung geschlossen und insoweit angenommen, dass in der fluidführenden Einrichtung eine zu geringe Menge des Fluids vorliegt.

Wird auf die Fluidunterversorgung erkannt, so können geeignete Gegenmaßnahmen eingeleitet werden. Zum einen wird beispielsweise eine Signaleinrichtung angesteuert, um einen Fahrer des Kraftfahrzeugs auf die Fluidunterversorgung der fluidführenden Einrichtung hinzuweisen. Zusätzlich oder alternativ kann die fluidführende Einrichtung und/oder die Antriebseinrichtung in einen Notbetrieb versetzt werden, in welchem lediglich eine herabgesetzte Leistung zum Antreiben des Kraftfahrzeugs zur Verfügung gestellt wird. Die Erfindung sieht vor, dass das Fluidvolumen mittels eines Modells ermittelt wird. Auf eine derartige Ausgestaltung wurde vorstehend bereits hingewiesen. Es ist also gerade nicht vorgesehen, das in dem Fluidsumpf vorliegende Fluidvolumen mittels geeigneter Mittel, beispielsweise einem Sensor, zu messen. Selbstverständlich kann genau dies jedoch alternativ der Fall sein, sodass das im Rahmen der Beschreibung erläuterte Verfahren zum Plausibilisieren der Messwerte des Sensors herangezogen werden kann. Die Erfindung sieht vor, dass das Fluidvolumen pro Zeiteinheit um ein anhand der Drehzahl der Fluidpumpe bestimmtes Entnahmevolumen verringert wird, und dass das Fluidvolumen pro Zeiteinheit um ein anhand der Temperatur ermitteltes Zuführvolumen vergrößert wird. Das Modell, mittels welchem das momentan in dem Fluidsumpf vorliegende Fluidvolumen zumindest näherungsweise ermittelt wird, beruht insoweit auf vergleichsweise einfachen Operationen. So wird das Fluidvolumen um das bestimmte Entnahmevolumen verringert, wobei dies in jeder Zeiteinheit, also einem bestimmten Zeitraum, vorgesehen ist.

Das Entnahmevolumen ist bevorzugt ein Absolutwert und weist insoweit einen positiven Wert auf. Selbstverständlich kann es jedoch einen negativen Wert aufweisen und zu dem Fluidvolumen pro Zeiteinheit addiert werden. Die Zeiteinheit kann grundsätzlich beliebig gewählt sein. Vorzugsweise weist sie jedoch einen Wert auf, aus welchem zumindest näherungsweise ein stetiger Verlauf des Fluidvolumens über der Zeit resultiert. Die Zeiteinheit kann insoweit mathematisch gesehen beispielsweise infinitesimal klein sein, sodass das Entnahmevolumen in Form eines Gradient über der Zeit vorliegt. Das Entnahmevolumen wird anhand der Drehzahl der Fluidpumpe ermittelt. Die Drehzahl der Fluidpumpe ist zumindest näherungsweise proportional zu der Menge des Fluids, welche dem Fluidsumpf pro Zeiteinheit entnommen wird.

Zusätzlich wird das Fluidvolumen pro Zeiteinheit um das anhand der Temperatur ermittelte Zuführvolumen vergrößert. Grundsätzlich gelten die vorstehenden Ausführungen hinsichtlich des Entnahmevolumens für das Zuführvolumen analog. Auch das Zuführvolumen ist vorzugsweise ein Absolutwert und weist insoweit einen positiven Wert auf. Beispielsweise ist das Zuführvolumen umso größer, je höher die Temperatur ist. Als Temperatur wird beispielsweise die Temperatur der fluidführenden Einrichtung beziehungsweise eine Fluidtemperatur des Fluids herangezogen. Die Viskosität des Fluids hängt direkt von der Temperatur ab. Das bedeutet, dass bei höheren Temperaturen das Fluid eine geringere Viskosität aufweist und insoweit leichter und mithin schneller in Richtung des Fluidsumpfs strömen kann. Daraus folgt, dass das aus der Temperatur ermittelte Zuführvolumen zumindest näherungsweise Aufschluss auf die Menge des Fluids geben kann, welche dem Fluidsumpf pro Zeiteinheit zugeführt wird. Bei der Modellierung des Fluidvolumens finden sowohl das Entnahmevolumen als auch das Zuführvolumen Anwendung. Pro Zeiteinheit wird also das Fluidvolumen sowohl um das Entnahmevolumen verringert als auch um das Zuführvolumen vergrößert. Es ergibt sich zumindest für das vorliegende Verfahren eine ausreichende Näherung für das tatsächlich in dem Fluidsumpf vorliegende Fluidvolumen.

Eine bevorzugte Ausgestaltung der Erfindung sieht vor, dass das modellierte Fluidvolumen nach unten auf einen Minimalwert und/oder nach oben auf einen Maximalwert begrenzt wird. Weil das Fluidvolumen lediglich modelliert wird, kann es ohne Begrenzung unter Umständen Werte annehmen, welche nicht sinnvoll sind. Entsprechend wird das Fluidvolumen auf den Minimalwert und/oder den Maximalwert begrenzt, vorzugsweise auf beide. In letzterem Fall liegt das modellierte Fluidvolumen insoweit stets in einem Intervall, welches von dem Minimalwert und dem Maximalwert eingeschlossen ist.

Eine Weiterbildung der Erfindung sieht vor, dass bei einem Betriebsstart der fluidführenden Einrichtung das Fluidvolumen auf einen anhand einer Standzeit der fluidführenden Einrichtung ermittelten Initialwert gesetzt wird. Unter dem Betriebsstart der fluidführenden Einrichtung ist beispielsweise ein Zeitpunkt zu verstehen, zu welchem die fluidführende Einrichtung, insbesondere die Fluidpumpe, nach einer gewissen Standzeit, insbesondere einer Standzeit des Kraftfahrzeugs, wieder in Betrieb genommen wird. Die Standzeit der fluidführenden Einrichtung ist dabei die Zeitdauer seit einem dem Betriebsstart unmittelbar vorhergegangenes Betriebsende der fluidführenden Einrichtung, an welchem die fluidführende Einrichtung, insbesondere die Fluidpumpe, außer Betrieb genommen wurde. Von Bedeutung ist dabei insbesondere, dass während der Standzeit der fluidführenden Einrichtung die Fluidpumpe außer Funktion ist.

In analoger Anwendung der vorstehenden Ausführungen kann insoweit aus der Standzeit auf die Menge des Fluids geschlossen werden, welche während der Standzeit in den Fluidsumpf zurückgelangt ist, insbesondere aufgrund des Schwerkrafteinflusses. Aus der Standzeit der fluidführenden Einrichtung wird zunächst der Initialwert ermittelt und anschließend das Fluidvolumen auf diesen gesetzt. Nachfolgend kann gemäß den vorstehenden Ausführungen das Fluidvolumen mithilfe des Modells, insbesondere unter Anwendung des Entnahmevolumens und/oder des Zuführvolumens, berechnet werden. Liegt die Standzeit der fluidführenden Einrichtung dabei unter einer bestimmten Minimalstandzeit, kann davon ausgegangen werden, dass lediglich ein (geringer) Teil des Fluids zurück in den Fluidsumpf gelangt ist. Entsprechend kann der Initialwert in diesem Fall auf den vorstehend beschriebenen Minimalwert gesetzt werden. Der Minimalwert entspricht beispielsweise derjenigen Fluidmenge, welche minimal in der fluidführenden Einrichtung zulässig ist oder einem Bruchteil von dieser.

In einer weiteren Ausgestaltung der Erfindung ist vorgesehen, dass die modellierte Stromstärke anhand der Drehzahl der Fluidpumpe und/oder der Temperatur mittels einer mathematischen Beziehung, eines Kennfelds und/oder einer Tabelle ermittelt wird. Die Stromstärke ist somit unmittelbar entweder von der Drehzahl der Fluidpumpe oder der Temperatur abhängig. Besonders bevorzugt hängt die modellierte Stromstärke sowohl von der Drehzahl als auch von der Temperatur ab. Die Drehzahl und/oder die Temperatur dienen als Eingangsgrößen für die mathematische Beziehung, das Kennfeld und/oder die Tabelle. Aus diesen ergibt sich die modellierte Stromstärke als Ausgangsgröße.

Eine besonders bevorzugte Ausführungsform sieht dabei vor, dass die mathematische Beziehung, das Kennfeld und/oder die Tabelle wenigstens einmalig, vorzugsweise periodisch, mit der gemessenen Stromstärke angepasst werden/wird. Das Modell, mittels welchem die modellierte Stromstärke ermittelt wird, wird somit an die tatsächlichen Gegebenheiten der Fluidpumpe, insbesondere an die tatsächlich gemessene Stromstärke angepasst. Zu diesem Zweck werden die Drehzahl der Fluidpumpe und/oder die Temperatur einerseits sowie die gemessene Stromstärke andererseits erfasst. Diese Größen werden anschließend in die mathematische Beziehung, das Kennfeld beziehungsweise die Tabelle übertragen, sodass bei der Verwendung derselben Drehzahl und/oder Temperatur die sich ergebende modellierte Stromstärke der gemessenen Stromstärke entspricht. Das Anpassen wird beispielsweise wenigstens einmalig vorgenommen. Besonders bevorzugt erfolgt es jedoch periodisch, insbesondere in bestimmten Zeitabständen und/oder unter bestimmten Bedingungen.

Eine Weiterbildung der Erfindung sieht vor, dass der Vergleichswert aus der modellierten Stromstärke durch Anwenden eines variablen Offsets und/oder eines konstanten Offsets ermittelt wird. Der Vergleichswert entspricht also nicht unmittelbar der modellierten Stromstärke. Vielmehr wird diese durch den Offset angepasst. Dabei kann zum einen der variable Offset und zum anderen der konstante Offset herangezogen werden. Der variable Offset weist einen bestimmten Wert auf, welcher sich aus wenigstens einem Betriebsparameter und/oder einer Zustandsgröße der fluidführenden Einrichtung ergibt. Der konstante Offset weist dagegen einen bestimmten, gleichbleibenden Wert auf. Beispielsweise wird der variable Offset von der modellierten Stromstärke zum Erlangen des Vergleichswerts subtrahiert, während der konstante Offset addiert oder subtrahiert wird. Kommen beide Offsets zur Anwendung, so entspricht der Vergleichswert der modellierten Stromstärke verkleinert durch den variablen Offset und vergrößert oder verkleinert durch den konstanten Offset.

Beispielsweise wird auf die Fluidunterversorgung unter der Bedingung geschlossen, dass die gemessene Stromstärke kleiner ist als der Vergleichswert, der durch Subtraktion des konstanten Offsets ermittelt ist. Ist dagegen die gemessene Stromstärke größer als der Vergleichswert, insbesondere dem durch Addition des konstanten Offsets ermittelte Vergleichswert, so kann auf eine ausreichende Fluidversorgung geschlossen werden. Mithilfe des konstanten Offsets kann insoweit ein hystereseartiges Verhalten realisiert werden. Somit kann ein abwechselndes Erkennen auf Vorliegen und Nichtvorliegen der Fluidunterversorgung aufgrund geringer Schwankungen vermieden werden.

Beispielsweise können also zwei Vergleichswerte bestimmt werden, wobei ein erster Vergleichswert durch Subtraktion des konstanten Offsets und ein zweiter Vergleichswert durch Addition des konstanten Offsets ermittelt wird. Die gemessene Stromstärke wird nun mit beiden Vergleichswerten verglichen. Ist sie kleiner als der erste Vergleichswert, so wird auf die Fluidunterversorgung erkannt. Ist sie größer als der zweite Vergleichswert, so liegt die ausreichende Fluidversorgung vor.

Schließlich kann in einer weiteren Ausgestaltung der Erfindung vorgesehen sein, dass der variable Offset in Abhängigkeit von der Drehzahl der Fluidpumpe ermittelt wird. Als Betriebsgröße beziehungsweise Zustandsgröße wird somit die Drehzahl herangezogen. Beispielsweise ist der variable Offset umso größer, je größer die Drehzahl der Fluidpumpe ist.

Die Erfindung betrifft weiterhin eine fluidführende Einrichtung, insbesondere zur Durchführung des Verfahrens gemäß den vorstehenden Ausführungen, die eine elektrisch betriebene Fluidpumpe aufweist, die Fluid aus einem Fluidsumpf der fluidführenden Einrichtung fördert und wenigstens einem Fluidverbraucher zuführt. Dabei ist vorgesehen, dass die fluidführende Einrichtung dazu ausgebildet ist, ein Fluidvolumen in dem Fluidsumpf sowie anhand der Drehzahl der Fluidpumpe eine modellierte Stromstärke des von der Fluidpumpe aufgenommenen elektrischen Stroms zu ermitteln und aus der modellierten Stromstärke einen Vergleichswert zu bestimmen, wobei auf eine Fluidunterversorgung der fluidführenden Einrichtung geschlossen wird, wenn das Fluidvolumen größer als ein Schwellenwert und eine gemessene Stromstärke des von der Fluidpumpe aufgenommenen elektrischen Stroms kleiner als der Vergleichswert ist.

Auf die Vorteile einer derartigen Ausgestaltung der fluidführenden Einrichtung beziehungsweise einer derartigen Vorgehensweise wurde bereits hingewiesen. Sowohl die fluidführende Einrichtung als auch das entsprechende Verfahren können gemäß den vorstehenden Ausführungen weitergebildet sein, sodass insoweit auf diese verwiesen wird.

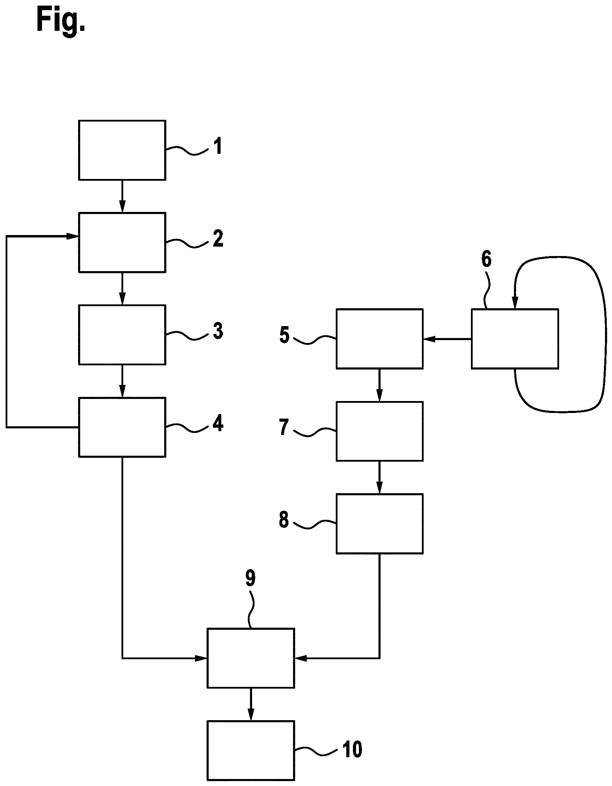

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Ablaufdiagramm eines Verfahrens zum Betreiben einer fluidführenden Einrichtung.

Die Figur zeigt ein Ablaufdiagramm für ein Verfahren zum Betreiben einer fluidführenden Einrichtung. Diese verfügt über eine elektrisch betriebene Fluidpumpe, die Fluid aus einem Fluidsumpf der fluidführenden Einrichtung fördert und wenigstens einem Fluidverbraucher, beispielsweise einem Fluidauslass, zuführt.

Zunächst wird mittels eines Modells ein Fluidvolumen in dem Fluidsumpf ermittelt. Dazu wird in einem Schritt 1 ein Initialwert für das Fluidvolumen bestimmt und das Fluidvolumen auf diesen Initialwert gesetzt. Der Initialwert wird beispielsweise anhand einer Standzeit der fluidführenden Einrichtung ermittelt. Vorzugsweise ist der Initialwert umso größer, je größer die Standzeit der fluidführenden Einrichtung ist. Die Standzeit wird beispielsweise mittels eines Zeitnehmers, insbesondere eines Steuergeräts der fluidführenden Einrichtung, ermittelt. Anschließend wird in einem Schritt 2 das Fluidvolumen um ein Entnahmevolumen verringert. In einem Schritt 3 dagegen wird das sich somit ergebende Fluidvolumen um ein Zuführvolumen vergrößert.

Während das Entnahmevolumen beispielsweise unmittelbar von der Drehzahl der Fluidpumpe abhängt, wird vorzugsweise das Zuführvolumen anhand einer Temperatur ermittelt. Die Temperatur entspricht dabei zum Beispiel einer Temperatur der fluidführenden Einrichtung, insbesondere einer Fluidtemperatur des Fluids. Nachfolgend wird in einem Schritt 4 das modellierte Fluidvolumen nach unten auf einen Minimalwert und nach oben auf einen Maximalwert begrenzt, sodass also das modellierte Fluidvolumen in einem von dem Minimalwert und dem Maximalwert eingeschlossenen Intervall liegt. Diese Vorgehensweise wird ausgehend von dem Schritt 2 wiederholt. Vorzugsweise laufen die Schritte 2, 3 und 4 während einer bestimmten Zeiteinheit ab und werden permanent wiederholt, bis ein Betriebsende der fluidführenden Einrichtung erreicht ist. Die Zeiteinheit entspricht beispielsweise mindestens 10 ms und/oder höchstens 20 ms, höchstens 40 ms oder höchstens 80 ms.

Parallel hierzu wird in einem Schritt 5 eine modellierte Stromstärke anhand der Drehzahl der Fluidpumpe bestimmt. Zusätzlich kann die bereits erwähnte Temperatur herangezogen werden. Die modellierte Stromstärke wird dabei vorzugsweise aus einer mathematischen Beziehung, einem Kennfeld und/oder einer Tabelle bestimmt. Die mathematische Beziehung, das Kennfeld beziehungsweise die Tabelle können im Rahmen eines sich permanent wiederholenden Schritts 6 mittels einer gemessenen Stromstärke angepasst werden.

Zu diesem Zweck werden neben der gemessenen Stromstärke zudem die Drehzahl der Fluidpumpe sowie die Temperatur ermittelt und mit diesen Größen die Beziehung, das Kennfeld beziehungsweise die Tabelle adaptiert. An den Schritt 5 schließt sich unmittelbar ein Schritt 7 an. In diesem wird die modellierte Stromstärke um einen variablen Offset angepasst, beispielsweise um den variablen Offset verringert. Der variable Offset wird dabei vorzugsweise in Abhängigkeit von der Drehzahl der Fluidpumpe ermittelt.

Die sich so ergebende modellierte Stromstärke wird nachfolgend in einem Schritt 8 mit einem konstanten Offset angepasst. Dieser ist oder wird einmalig festgelegt und bleibt nachfolgend konstant. Insgesamt ergibt sich aus der modellierten Stromstärke, die durch Anwenden des variablen Offsets und/oder des konstanten Offsets erhalten wird, ein Vergleichswert. Dieser Vergleichswert wird in dem nachfolgenden Schritt 9 mit der gemessenen Stromstärke verglichen. Gleichzeitig wird das Fluidvolumen mit einem Schwellenwert verglichen. Dabei wird insbesondere geprüft, ob das Fluidvolumen größer ist als der Schwellenwert und ob die gemessene Stromstärke kleiner als der Vergleichswert ist. Treffen diese beiden genannten Bedingungen zu, so wird im Rahmen eines Schritts 10 auf eine Fluidunterversorgung der fluidführenden Einrichtung erkannt. Ist dies der Fall, so können geeignete Gegenmaßnahmen eingeleitet werden.

Mithilfe des vorstehend erläuterten Verfahrens kann ohne Sensor zur Ermittlung der in der fluidführenden Einrichtung vorhandenen Fluidmenge auf das Vorhandensein einer ausreichenden Menge Fluid geschlossen werden. Insbesondere wird auf die Fluidunterversorgung der fluidführenden Einrichtung erkannt, falls die Fluidmenge nicht ausreichen sollte.

## Patentansprüche

1. Verfahren zum Betreiben einer fluidführenden Einrichtung, die eine elektrisch betriebene Fluidpumpe aufweist, die Fluid aus einem Fluidsumpf der fluidführenden Einrichtung fördert und wenigstens einem Fluidverbraucher zuführt, **dadurch gekennzeichnet, dass** ein modelliertes Fluidvolumen in dem Fluidsumpf mittels eines Modells ermittelt wird, indem das modellierte Fluidvolumen pro Zeiteinheit um ein anhand der Drehzahl der Fluidpumpe bestimmtes Entnahmevolumen verringert wird und um ein anhand einer Temperatur ermitteltes Zuführvolumen vergrößert wird, sowie eine anhand der Drehzahl der Fluidpumpe modellierte Stromstärke des von der Fluidpumpe aufgenommenen elektrischen Stroms ermittelt wird, wobei aus der modellierten Stromstärke ein Vergleichswert bestimmt und auf eine Fluidunterversorgung der fluidführenden Einrichtung geschlossen wird, wenn das modellierte Fluidvolumen größer als ein Schwellenwert und eine gemessene Stromstärke des von der Fluidpumpe aufgenommenen elektrischen Stroms kleiner als der Vergleichswert ist.

2. Verfahren nach Anspruch 1, **dadurch gekennzeichnet, dass** das modellierte Fluidvolumen nach unten auf einen Minimalwert und nach oben auf einen Maximalwert begrenzt wird.

3. Verfahren nach einem der vorhergehenden Ansprüche, **dadurch gekennzeichnet, dass** bei einem Betriebsstart der fluidführenden Einrichtung das Fluidvolumen auf einen anhand einer Standzeit der fluidführenden Einrichtung ermittelten Initialwert gesetzt wird.

4. Verfahren nach einem der vorhergehenden Ansprüche, **dadurch gekennzeichnet, dass** die modellierte Stromstärke anhand der Drehzahl der Fluidpumpe und/oder der Temperatur mittels einer mathematischen Beziehung, eines Kennfelds und/oder einer Tabelle ermittelt wird.

5. Verfahren nach einem der vorhergehenden Ansprüche, **dadurch gekennzeichnet, dass** die mathematische Beziehung, das Kennfeld und/oder die Tabelle wenigstens einmalig, vorzugsweise periodisch, mit der gemessenen Stromstärke angepasst werden.

6. Verfahren nach einem der vorhergehenden Ansprüche, **dadurch gekennzeichnet, dass** der Vergleichswert aus der modellierten Stromstärke durch Anwenden eines variablen Offsets und/oder eines konstanten Offsets ermittelt wird.

7. Verfahren nach einem der vorhergehenden Ansprüche, **dadurch gekennzeichnet, dass** der variable Offset in Abhängigkeit von der Drehzahl der Fluidpumpe ermittelt wird.

8. Fluidführende Einrichtung, insbesondere zur Durchführung des Verfahrens nach einem der vorhergehenden Ansprüche, die eine elektrisch betriebene Fluidpumpe aufweist, die Fluid aus einem Fluidsumpf der fluidführenden Einrichtung fördert und wenigstens einem Fluidverbraucher zuführt, **dadurch gekennzeichnet, dass** die fluidführende Einrichtung dazu ausgebildet ist, ein modelliertes Fluidvolumen in dem Fluidsumpf mittels eines Modells zu ermitteln, indem das modellierte Fluidvolumen pro Zeiteinheit um ein anhand der Drehzahl der Fluidpumpe bestimmtes Entnahmevolumen verringert wird und um ein anhand einer Temperatur ermitteltes Zuführvolumen vergrößert wird, sowie eine anhand der Drehzahl der Fluidpumpe modellierte Stromstärke des von der Fluidpumpe aufgenommenen elektrischen Stroms zu ermitteln, wobei aus der modellierten Stromstärke einen Vergleichswert bestimmt und auf eine Fluidunterversorgung der fluidführenden Einrichtung geschlossen wird, wenn das modellierte Fluidvolumen größer als ein Schwellenwert und eine gemessene Stromstärke des von der Fluidpumpe aufgenommenen elektrischen Stroms kleiner als der Vergleichswert ist.

## Claims

1. Method for operating a fluid-guiding device, comprising an electrically operated fluid pump which delivers fluid from a fluid sump of the fluid-guiding device and supplies it to at least one fluid consumer, **characterised in that** a modelled fluid volume in the fluid sump is determined from a model, by reducing the modelled fluid volume per unit of time by a removal volume determined based on the rotational speed of the fluid pump and by increasing the modelled fluid volume per unit of time by a feed volume determined based on a temperature, and a modelled current intensity of the electric current taken up by the fluid pump is determined based on the rotational speed of the fluid pump, wherein a comparison value is determined from the modelled current intensity and a deficient fluid supply of the fluid-guiding device is inferred if the modelled fluid volume is greater than a threshold value and a measured current intensity of the electric current taken up by the fluid pump is less than the comparison value.

2. Method according to claim 1, **characterised in that** the modelled fluid volume is bounded at the bottom by a minimum value and at the top by a maximum value.

3. Method according to any of the preceding claims, **characterised in that** during a start-up operation of the fluid-guiding device, the fluid volume is set at an initial value determined based on a standing time of the fluid-guiding device.

4. Method according to any of the preceding claims, **characterised in that** the modelled current intensity is determined based on the rotational speed of the fluid pump and/or the temperature by means of a mathematical relation, a characteristic field and/or a table.

5. Method according to any of the preceding claims, **characterised in that** the mathematical relation, the characteristic field and/or the table are adapted at least once, preferably periodically, with the measured current intensity.

6. Method according to any of the preceding claims, **characterised in that** the comparison value is determined from the modelled current intensity by using a variable offset and/or a constant offset.

7. Method according to any of the preceding claims, **characterised in that** the variable offset is determined as a function of the rotational speed of the fluid pump.

8. Fluid-guiding device, in particular for carrying out the method according to any of the preceding claims, comprising an electrically operated fluid pump which delivers fluid from a fluid sump of the fluid-guiding device and supplies it to at least one fluid consumer, **characterised in that** the fluid-guiding device is configured to determine a modelled fluid volume in the fluid sump from a model, by reducing the modelled fluid volume per unit of time by a removal volume determined based on the rotational speed of the fluid pump and by increasing the modelled fluid volume per unit of time by a feed volume determined based on a temperature, and to determine a modelled current intensity of the electric current taken up by the fluid pump based on the rotational speed of the fluid pump, wherein a comparison value is determined from the modelled current intensity and a deficient fluid supply of the fluid-guiding device is inferred if the modelled fluid volume is greater than a threshold value and a measured current intensity of the electric current taken up by the fluid pump is less than the comparison value.

## Revendications

1. Procédé de fonctionnement d'un dispositif acheminant du fluide qui présente une pompe à fluide à commande électrique qui transporte du fluide d'un carter de fluide du dispositif acheminant du fluide et l'amène au moins à un consommateur de fluide, **caractérisé en ce qu'**un volume de fluide modélisé est déterminé dans le carter de fluide à l'aide d'un modèle, **en ce que** le volume de fluide modélisé par unité de temps est réduit d'un volume de prélèvement déterminé à l'aide de la vitesse de rotation de la pompe à fluide et est augmenté d'un volume d'alimentation déterminé à l'aide d'une température, ainsi qu'une intensité de courant modélisée à l'aide de la vitesse de rotation de la pompe à fluide du courant électrique reçu par la pompe à fluide, dans lequel une valeur comparative est déterminée à partir de l'intensité de courant modélisée et il est conclu à une alimentation inférieure en fluide du dispositif acheminant du fluide, lorsque le volume de fluide modélisé est supérieur à une valeur seuil et une intensité de courant mesurée du courant électrique reçu par la pompe à fluide est inférieure à la valeur comparative.

2. Procédé selon la revendication 1, **caractérisé en ce que** le volume de fluide modélisé est limité vers le bas à une valeur minimale et vers le haut à une valeur maximale.

3. Procédé selon l'une quelconque des revendications précédentes, **caractérisé en ce qu'**en cas de démarrage de fonctionnement du dispositif acheminant du fluide le volume de fluide est placé à une valeur initiale déterminée à l'aide d'une durée de vie du dispositif acheminant du fluide.

4. Procédé selon l'une quelconque des revendications précédentes, **caractérisé en ce que** l'intensité de courant modélisée est déterminée à l'aide de la vitesse de rotation de la pompe à fluide et/ou de la température à l'aide d'un rapport mathématique, d'un champ caractéristique et/ou d'un tableau.

5. Procédé selon l'une quelconque des revendications précédentes, **caractérisé en ce que** le rapport mathématique, le champ caractéristique et/ou le tableau sont adaptés au moins une fois, de préférence périodiquement, avec l'intensité de courant mesurée.

6. Procédé selon l'une quelconque des revendications précédentes, **caractérisé en ce que** la valeur comparative est déterminée à partir de l'intensité de courant modélisée par application d'un décalage vari,able et/ou d'un décalage constant.

7. Procédé selon l'une quelconque des revendications précédentes, **caractérisé en ce que** le décalage variable est déterminé en fonction de la vitesse de rotation de la pompe à fluide.

8. Dispositif acheminant du fluide, en particulier pour la réalisation du procédé selon l'une quelconque des revendications précédentes, qui présente une pompe à fluide à commande électrique qui transporte du fluide d'un carter de fluide du dispositif acheminant du fluide et l'amène au moins à un consommateur de fluide, **caractérisé en ce que** le dispositif acheminant du fluide est réalisé afin de déterminer un volume de fluide modélisé dans le carter de fluide au moyen d'un modèle **en ce que** le volume de fluide modélisé par unité de temps est réduit d'un volume de prélèvement déterminé à l'aide de la vitesse de rotation de la pompe à fluide et est augmenté d'un volume d'alimentation déterminé à l'aide d'une température, ainsi que de déterminer une intensité de courant modélisée à l'aide de la vitesse de rotation de la pompe à fluide du courant électrique reçu par la pompe à fluide, dans lequel à partir de l'intensité de courant modélisée une valeur comparative est déterminée et il est conclu à une alimentation inférieure en fluide du dispositif acheminant du fluide lorsque le volume de fluide modélisé est supérieur à une valeur seuil et une intensité de courant mesurée du courant électrique reçu par la pompe à fluide est inférieure à la valeur comparative.
